# EUROPEAN PATENT APPLICATION

(11) **EP 1 267 253 A1**
(43) Date of publication of application: **18.12.2002**
(21) Application number: 01912271.2
(22) Date of filing: 12.03.2001
(51) Int. Cl.: G06F 3/00, G06F 13/00

(54) **INFORMATION DISPLAY**

(30) Priority: 21.03.2000 JP 2000083289
(71) Applicant: Sony Corporation, Tokyo 141-0001 (JP)
(72) Inventor: KATO, Kosuke, SONY CORPORATION, Tokyo 141-0001 (JP); HARADA, Tadanori, SONY CORPORATION, Tokyo 141-0001 (JP)
(74) Representative: Ayers, Martyn Lewis Stanley
(86) International application number: JP0101915
(87) International publication number: WO01071467

(57) **Abstract**

An information display apparatus connected to the network includes a communication unit, a first management area controller and a second management area controller. The communication unit acquires a first picture from the network. The first management area controller displays a first management area in a display unit provided on the information display apparatus and sorts the acquired first picture to display the sorted first picture. The first management area controller detects the first picture displayed in the first management area when an operator has specified the first picture. The second management area controller displays a second management area in a display unit provided on the information display apparatus, and determines a second picture, having the included related information, based on the specified picture. The second management area controller displays the second picture in the second management area, while displaying the related information included in the second picture, when an operation of specifying the second picture is done, to render the related information selectable. The second management area controller performs processing based on the related information if there is selection by the operator.

## Description

### Technical Field

The present invention relates to an information displaying apparatus useful when used mainly in a portable terminal, in which an operation on the part of an operator may be carried out extremely readily, using the information pertinent to a picture displayed on a display device as a clue.

More particularly, the present invention relates to a displaying apparatus for displaying the main display information obtained from an information source, which receives picture data distributed with the main display information and including related information such as a network address or a program component and displays it, by which network access is made easier.

### Background Art

Recently, with the Internet coming into widespread use, the number of servers accessible from terminals connected to the Internet is drastically increasing. In each server, a variety of information is recorded in accordance with the intention of the supervisor, such that a terminal operator is able to acquire the information by accessing the server from his or her terminal. In general, an operator willing to access the information on the Internet inputs a letter string termed URL from his or her terminal.

It should be noted that a terminal operator is generally highly likely to access the specified information on specified particular servers. Thus, in order to permit the terminal operator to access such information with a small number of operating steps, there is provided a function known as a bookmark. In the bookmark function, the identification of the information in question is represented by a sole letter string or a sole picture or icon. The operator selects and identifies the information, using the letter string as a clue, to access the so identified information. By this function, the information can be accessed more speedily for information identification than if a letter string such as URL is input to identify the information.

Meanwhile, the above-described technique is used not only in the personal computers, but has come to be applied extensively in the field of domestic electrical appliances in general. In particular, in an information terminal, termed a PDA (Personal Data Assistance), not only are the calculation and the schedule management simply performed, but the system is connected to the network, in order to permit the information terminal to access the specified information.

As the related technique, the Japanese Laying-Open Publication H-11-3432 discloses a browser system for classifying and registering the addresses supplied from a server. The Japanese Laying-Open Publication 200-214979 discloses a display apparatus in which bookmark contents can be viewed more readily or displayed as an overview by hierarchical representation of URL links.

However, the bookmark function merely denotes the site of the information by one letter string. As a result, the processing employing the bookmark is no other than accessing a specified site, while it is unable to cause any other operation. If an information supplier intends to bookmark plural network addresses, the operator is not permitted to execute the management collectively.

In addition, in the PDA, the CPU power usable therein is limited, such that, in a number of cases, use of a general-purpose browser program is desirably avoided to maintain its high operating speed characteristics.

### Disclosure of the Invention

It is therefore an object of the present invention to attenuate the technical disadvantages that the above-described conventional art presents.

It is a more specific object of the present invention to provide an information display apparatus connected to the network and which includes a communication unit, a first management area controller and a second management area controller, thereby attenuating the technical disadvantages that the above-described conventional art presents.

The communication unit acquires a first picture from the network.

The first management area controller displays a first management area in a display unit provided on the information display apparatus and sorts the acquired first picture to display the sorted first picture. The first management area controller detects the first picture displayed in the first management area when an operator has specified the first picture.

The second management area controller displays a second management area in a display unit provided on the information display apparatus, and determines a second picture, having the included related information, based on the specified picture. The second management area controller displays the second picture in the second management area, while displaying the related information included in the second picture, when an operation of specifying the second picture is done, to render the related information selectable. The second management area controller performs processing based on the related information in question on selection by the operator.

It is another object of the present invention to provide an information display apparatus in which a premium value associated with the first picture is acquired in the communication unit and in which the first picture acquired is sorted and displayed based on the premium value, thereby attenuating the technical disadvantages that the above-described conventional art presents.

It is noted that the premium value is a value provided in connection with a first picture and is predetermined by the information purveyor.

The first management area controller operates so that, among plural pictures furnished simultaneously, those with a higher order premium value are sorted to be in a position that may be more readily visually recognized by an operator.

It is yet another object of the present invention to provide an information display apparatus in which a premium value corresponding to the first picture is further acquired in the communication unit and in which the first management area controller performs calculations on the premium value at a preset time interval to sort and display the first picture based on the calculated results, thereby attenuating the technical disadvantages that the above-described conventional art presents.

That is, the first management area controller operates for changing the premium value of the first picture it supervises at a preset time interval.

Other objects, features and advantages of the present invention will become apparent from the following description of preferred embodiments thereof and the claims.

### Brief Description of the Drawings

Fig.1 shows a typical layout of each frame on a display device in a digital television.
Fig.2 shows a typical structure of an embodiment of the present invention.
Fig.3 shows typical embedding of the related information in an embodiment of the first picture information embodying the present invention.
Fig.4 shows another typical embedding of the related information in an embodiment of the first picture information embodying the present invention.
Fig.5 illustrates an operation on premium values according to the present invention.

### Best mode for Carrying out the Invention

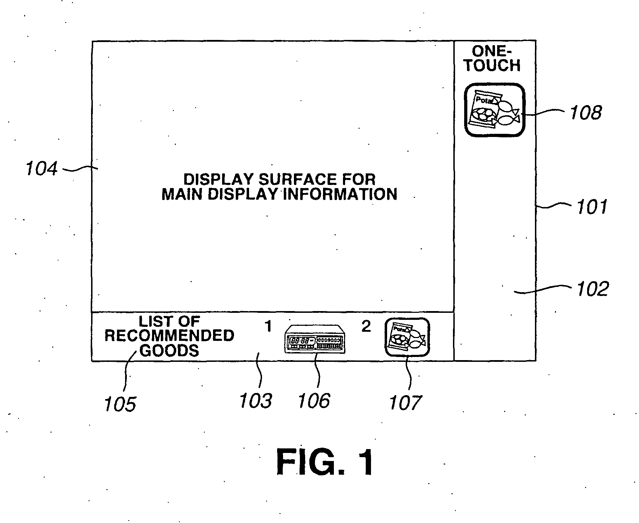

Referring to Figs.1 to 4, preferred embodiments of the present invention are hereinafter explained.

### (Related Information)

First, the related information, as a concept used in common in the present invention, is explained.

The related information is the information as the basis when it is desired to let the operator execute a specified operation, with the picture information as a clue, and means the totality of the information included in the picture information. Specifically, the related information is the information correlated with the icon or the included picture information. As an example, the related information is the information specifying the information which is stored in a particular server and which is desired to be referenced by the operator, such as URL or IP address. If a particular program is desired to be operated, the name of the program or the program itself may be included in the related information.

### (Picture information including the information)

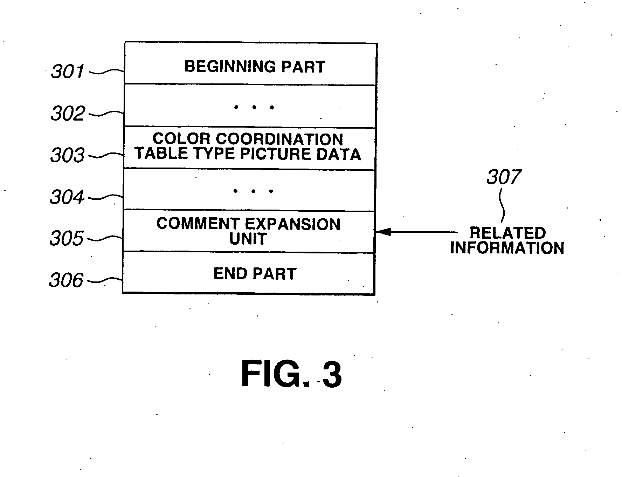

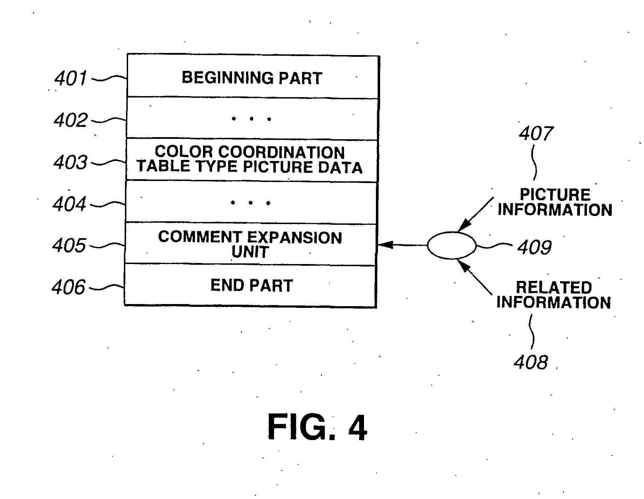

The picture information including the information, which is the common concept used in the present invention, is now explained with reference to Figs.3 and 4. The information to be included may be an identifier for specifying the related information and the picture.

Fig.3 shows a typical format of the picture information having the related information embedded therein.

Although the picture information shown herein is the GIF format picture, the picture information format is not limited to the GIF type format, but also the JPG or PCX type format.

A beginning part 301 is a field provided for identifying the present information to be the GIF format picture information, and is comprised of a letter array "GIF" with its version.

The pixels of color coordination table type picture data 303 is picture data arranged from left to right and from top to bottom. The color coordination table type picture data are coded using an LZW algorithm which is the variable-length code.

A comment expansion unit 305 includes the sentence information which is not the graphics information in the GIF datastream. This may comprise the graphics, names of production-related parties or persons or the comment on the contents and all other items not pertinent to control or graphics data.

An end part 306 indicates the end of the datastream and denotes that there is no other parameter information as from the end part 306. A blank 302 between the beginning part 301 and the color coordination table type picture data 303 and a blank 304 between the color coordination table type picture data 303 and the comment expansion unit 305 contain the other information. To these blanks, there are allocated the information including parameters such as, for example, a picture width, a picture height or the color resolution defining the area of the display device necessary for pictures now to be drawn.

The related information 307 is arrayed in the comment expansion unit305 directly or after encryption or the like processing to form a compact set of the picture information. The result is that the related information or identifiers may be included in the picture information such as the datastream.

Although the above explanation is based on the GIF format, it is the picture forms of other format type is recorded in an area distinct from the picture information.

The form of embedding in other picture information is explained with reference to Fig.4.

Fig.4 shows another typical format of the picture information having the related information embedded therein.

Here again, a picture of the GIF format is taken as an example in the picture information. In the present embodiment, the JPEG or PCX system, for example, may be adopted as the format in place of the GIF format.

The beginning part 401 is a field provided for identifying the present information to be the picture information of the GIF format. To this field is allocated the letter string "GIF" and its version.

In the color coordination table type picture data 403, the picture data comprised of pixels arranged from left to right and from top to bottom are to be arranged. Here, the picture information 407 and the related information 408 are made to co-exist in a watermark system and are mixed together at mix 409 so that the related information cannot be directly viewed but the picture information can be directly viewed. The information, thus mixed at mix 409, is encoded using an LZW algorithm of the variable length code.

The comment expansion unit405 includes the sentence information that cannot become the graphic information in the GIF datastream. Although the comment expansion unit 405 is not particularly required in the present embodiment, it can be used as necessary by the information purveyor by free definition.

An end portion 406 indicates that the datastream has come to a close without being followed by other information, such as parameter information.

Although the GIF format is used in the present typical pictures, any other suitable format picture system may be used, provided that it is recorded in an area distinct from the picture information.

### (Graphic image displayed in a display terminal)

Referring to Fig.1, typical graphic images displayed on a display terminal pertinent to the present invention is explained.

A display screen 101 operates to permit a human being to visually grasp the information from a display apparatus, such as a Braun tube display surface, TFT liquid crystal screen, or a screen of a display unit built into spectacles carried by the human being. Although the boundary portion of the display screen 101 is the outermost rim of the display device, the frame may also be displayed in the display device.

A one-touch frame 102 is a frame in which to display at least an icon 108 (or picture information, such as a photograph, hereinafter the same). If the operator of the present information display apparatus specifies the icon 108 by operating means, not shown, at least one related information is displayed in the one-touch window so that a certain processing is booted based on this displayed information. If there are plural information, one of these is selected so that a certain processing is booted based on this selected information. That is, the one-touch frame 102 on the display screen 101 acts as a particular management area for guiding the specified operation, with the icon 108 as clues, so that the operator is able to realize a new operation with the icon(s) displayed in this area as a clue.

An information purveying frame 103 is a frame in which to display at least icons 106, 107. If the operator of the present information display apparatus has specified the icon displayed in the frame, a new icon is added to the one-touch frame 102 based on this icon specifying operation.

It should be noted that the icon added at this time in the one-touch frame 102 may be the icon specified and displayed in the information purveying frame 103 or may be replaced by another icon as necessary. In the information purveying frame 103, there may be displayed the letter information 105 in addition to the icons. That is, the information purveying frame 103 on the display screen 101 operates as a special management area in which icons etc are displayed to cause the operator's interest and also in which the operator is able to perform the operation of specifying the icon to lead to registration on the one-touch frame 102.

Meanwhile, if, as to a particular operation by the operator, a pointing device, such as a mouse, is provided in the operating means, a user interface technique of so-called drag and drop of specifying an icon desired to be registered by a pointer and moving the icon on the one-touch frame 102 to drop it there may be used.

An information display surface 104 is a frame in which to display the content, such as movie in digital broadcast, and is an area utilized by the operator to display the information desired to be acquired. Meanwhile, the content means the totality of the information stimulating the human visual system for information transmission, such as still picture or teletext information, without being limited to the moving pictures.

### (First embodiment)

### (Structure)

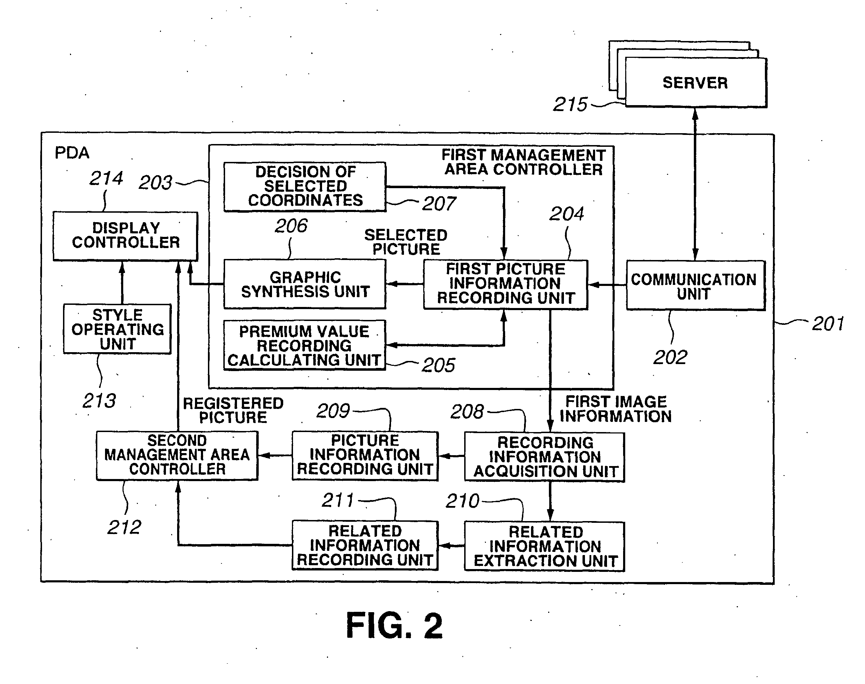

In an embodiment of the present invention, an illustrative structure of a display terminal 201 and its peripheral portions are explained with reference to Fig.2.

A communication unit 202 is an interface for having bidirectional communication with an external environment of the present information display apparatus 201, such as a modem or ISDN terminal adapter, connected to the telephone network, and can be connected to an external server 215 for information transmission/reception.

A first management area controller 203 is connected to the communication unit 202 to receive the first picture information as well as to exercise control on e.g., operations performed on an information purveying frame 103 displayed on the display device.

For example, if, by the operation of a display controller 214, as later explained, an output of the first management area controller 203 is displayed on a display device, the first picture information received is displayed on the information purveying frame 103 in the form of icons 106, 107. If the operator specifies the icon in question by operating means, not shown, that effect is notified to a recording information acquisition unit 208 as later explained to execute the processing pertinent to the icon in question. The displayed contents on the information purveying frame 103 are not limited to the icon but may include the text information 105. In the latter case, the text information 105 is requested and acquired from the server through the communication unit 202. The first management area controller 203 acquires the text information extracted from the information extraction unit 204 for display. By so doing, variegated information delivery may be assured from the information purveying frame.

Specifically, the first management area controller 203 includes a first picture recording unit 204, a premium value recording calculating unit 205, a graphic synthesis unit 206 and a selection coordinate decision unit 207.

The first picture recording unit 204 is connected to the communication unit 202 to store one or more picture information received from the server 215 transiently.

The premium value recording calculating unit 205 operates in unison with the first picture recording unit 204 to record premium values downloaded from the server for each of the picture information recorded in the first picture recording unit 204. The premium value recording calculating unit 205 also executes preset processing on the premium values pertinent to the icon for which preset time has elapsed since its acquisition, such as adding a constant to the premium value.

The selection coordinate decision unit 207 is connected to the first picture recording unit 204 to specify to which of the pictures recorded in the first picture recording unit corresponds a picture specified by an icon on the information purveying frame specified by an operator.

The graphic synthesis unit 206 sorts the picture information recorded in the first picture recording unit 204 into order for display in the information purveying frame, and transmits the so sorted picture information to a display controller which will be explained subsequently.

The recording information acquisition unit 208 is connected to the first management area controller 203 and, when it is detected in the first management area controller 203 that a operator has specified an icon from operating means, the recording information acquisition unit 208 specifies which is the icon so specified, while acquiring the first picture information pertinent to the icon.

A picture information recording unit 209 is connected to the recording information acquisition unit 208 and is adapted for storing the picture information acquired by the recording information acquisition unit 208 either directly or as it is converted in a preset code. The so-stored picture information is furnished to a picture display forming unit 908 so that the recorded picture information will be displayed in the one-touch frame 102.

A second management area controller 212 is connected to a picture information recording unit 209 to perform communication to display the icon recorded in the picture information recording unit 209 in the one-touch frame 102. If the operator has specified the icon 108 displayed in the one-touch frame through operating means, the second management area controller 212 makes an inquiry at a related information recording unit 211, as later explained, so that the operation can be initiated based on the related information. If there are plural related information, it suffices to perform control to cause the candidates for selection to permit the operator to select one of the related information. The operator may select the related information to enable the operation to be started based on the selected related information. If the related information is comprised of the single information, it is of course possible to get its contents confirmed to initiate the operation based on the related information.

A related information extraction unit 210 is connected to the recording information acquisition unit 208, so that, in case a notification is made from the first management area controller for performing the processing pertinent to the icon, the related information extraction unit 210 is able to acquire the picture information, so acquired, to extract the related information included in the picture information.

The related information recording unit 211 is connected to the related information extraction unit 210 and to the second management area controller 212 to record the related information extracted by the related information extraction unit 210 along with the pertinence relation information with respect to the icon. When informed by the second management area controller 212 that the icon has been specified, the related information recording unit 211 notifies the related information pertinent to the icon in question to the second management area controller 212.

A style operating unit 213 determines the layout of each frame, under a command from operating means, not shown, for thereby affording a control value to the display control unit. Meanwhile, the style is the information for prescribing the layout of the information to be displayed, the size of the letter and so forth.

The display controller 214 is connected to each output of a first management area controller 203 and a second management area controller 212 to exercise control so that the information synthesized by the graphic synthesis unit 206 for display on the information purveying frame 103 and the information display-controlled by a second management area controller 212 for display on a one-touch frame 102 to be displayed on a display device, not shown, of the present information display apparatus. Since the display controller 214 is also connected to a style operating unit 213, display may be in conformity to the style specified therein. If the operator with a weak visual acuity intends to enlarge the letter size, he or she gives a corresponding command from the style operating unit 213, whereupon the display control unit 214 manages control to display the text information 105 generated by the first management area controller 203 to an enlarged scale. As the style, default values may be used, in which case it is unnecessary to implement the style operating unit 213. Although the display control unit 214 performs layout control as the main display information, information purveying frame or the one-touch frame co-exist. However, there is no necessity of displaying these in their entirety. For example, only the main display information, only the information purveying frame, only the one-touch frame, only the main display information and the information purveying frame or only the main display information and the one-touch frame may be selectively displayed. In this case, it suffices if the corresponding decision is given under a command issued from the style operating unit 213.

### (Operation)

The typical operation pertinent to an embodiment of the present invention is hereinafter explained.

### (Generation of the information for distribution)

A manager of an information purveying site embeds the related information such as URL addresses of the site of the so-called catering service of delivery sale of potato chips in an icon, using a technique explained with reference to Figs.3 and 4. The premium values are also determined in the respective icons. These premium values may be embedded in the icons or handled as separate information as in the case of the related information.

This is arranged in a server 215 to await accessing from the information display apparatus 201. Of course, the so-called push technique may be used to send the information directly from the server to the information display apparatus.

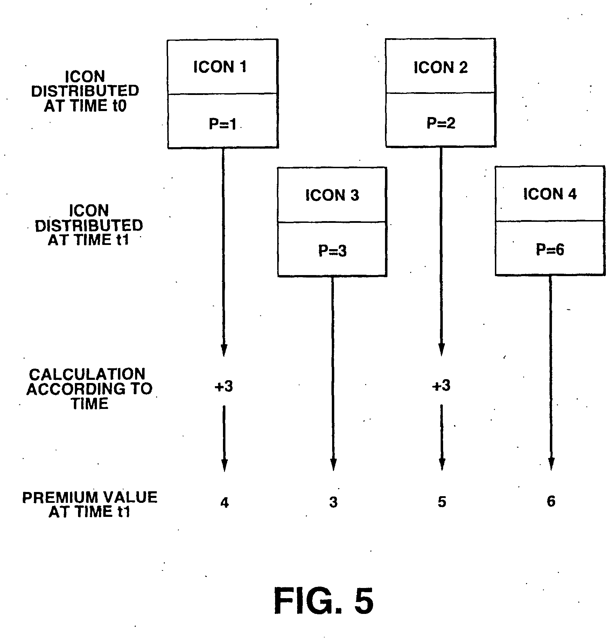

Meanwhile, specified examples of the premium values will be explained subsequently with reference to Fig.5.

### (Operation from connection to display of the information purveying frame)

The operation from connection in the information display apparatus to displaying on the information purveying frame is hereinafter explained. By operating means, not shown, the operator establishes the communication network from the communication unit 202 to the server 215. The communication unit 202 then downloads the first picture information, having included therein the related information maintained in the server 215, to transfer the contents to the first picture recording unit 204.

The first picture recording unit 204 records this first picture information either directly or in a compression coded form. Since the first picture information has a corresponding premium value, this is recorded in the premium value recording unit. If the premium value is included as the related information in the first picture information, this premium value is extracted from the first picture information. If the premium value is distinctly supervised on the server 215, the premium value for the first picture information is requested and acquired from the server through the communication unit 202.

Based on a value recorded in the premium value recording unit, the picture information recorded in the first picture information recording unit is sorted and displayed in the information purveying frame by the graphic synthesis unit.

### (Sorting operation based on premium value)

The sorting performed on the basis of the premium value is explained with reference to Fig.5.

It is assumed that two or more icons cannot be displayed in the information purveying frame and that the selection and the sorting are in the order of the increasing magnitudes of the premium values. In the following explanation, it is also assumed that the premium value recording calculating unit 205 adds e.g. a value of 3 to the premium value of an icon for which a preset time has elapsed since its acquisition.

First, it is assumed that the icons 1 and 2, to which the premium values of 1 and 2 are accorded, were distributed at time t0. Since there is no other displayed contents at time t0, the icons 1 and 2 are displayed in the information purveying frame.

It is also assumed that the icons 3 and 4, having premium values of 3 and 6, accorded thereto, are then delivered at time t1. Since two or more icons cannot be displayed in the information purveying frame, it is necessary to select one icon.

If the interval between t1 and t0 is small such that there is no change in the premium value, the icons 1 and 2 are displayed, because 3 is added to the premium values of the icons 1 and 2. If conversely the interval between t1 and t0 is long and changes in the premium value occurred, 3 is added to the premium values of the icons 1 and 2, so that the premium values of the icons 1 to 4 are 4, 5, 3, 6 and hence the icons 3 and 1 are displayed. A for the display sequence, the icons with premium values lower in magnitudes may be placed in more ready-to-see places. By so doing, the icons with higher premium values may be placed for an extended time in more obtrusive places in the information purveying frame.

### (Icon selecting operation by the operator and apparatus behavior)

If the above processing is finished, the operator is then able to proceed to register an icon. If the operator is interested in the potato chips, he or she specifies the icon 107 by operating means, not shown, to proceed to register the icon for later access.

If this operation is finished, the first management area controller 203 is responsive to the command for registration to specify the icon in question 107 by the effect of the selection coordinate decision unit 207 to command the recording information acquisition unit 208 to register the icon by the second management area controller.

The recording information acquisition unit 208 is responsive to the command for registration from the first management area controller 203 to acquire the icon to transmit its data to the picture information recording unit 209 and to the related information extraction unit 210.

The picture information recording unit 209 records a picture data portion of the icon specified for registration. The recording contents are communicated to the second management area controller 212 for display on the one-touch frame 102.

On the other hand, the icon, having the related information included therein, is also communicated to the related information extraction unit 210, where the information is recorded in the related information recording unit 211.

### (Operation of the operator based on the related information and the apparatus behavior)

When the above-described operation is finished, the icon the operator wished is displayed on the one-touch frame 102, so the operator is able to perform various processing operations on this one-touch frame.

That is, in the present embodiment, in which the operator has the icon pertinent to potato chips registered on the one-touch frame, is able to specify a potato chip icon 108 on the one-touch frame to purchase the goods pertinent to the icon or to check for its inventory based on the related information pertinent to this icon.

If the above operation is done, the information display apparatus 201 detects, by the function of the second management area controller 212, to which of the icons recorded in the picture information recording unit 209 corresponds the specified icon. The related information of the icon corresponding to the icon is read out from the related information recording unit 211 and, if the icon has plural related information, these plural related information are displayed on certain portions of the display surface to await the selection by the operator. If the selection by the operator is done, or if there is only one related information, the operation is determined based on the related information to perform the operation. Specifically, if the specified information is extracted from the server in the specified address, that effect is notified to the communication unit 202 to accept data from the server to display the data in a certain part of the display device. If a program is to be booted, the program is executed. If the program is embedded as the related information, that program is executed, whereas, if the program is pre-recorded in the information display apparatus 201, that processing is executed.

By driving the information display apparatus as described above, the operator is able to acquire the information effectively from the information purveyor, as well as to select the corresponding operation readily, thus achieving effective information purveying on the part of the information purveyor.

### (Other embodiments)

Other embodiments of the present invention are hereinafter explained.

### (Other embodiment 1)

In the foregoing description, the communication path is assumed to be the communication network. However, the communication path may also utilize a server enclosed in the present apparatus without being limited to the external environment connected to the present apparatus. That is, drivers for e.g., a CD-ROM, semiconductor memories, magnetic memories or magneto-optical memories may be provided and used as information sources.

### (Other embodiment 2)

There are occasions where an information purveyor is willing to register an icon, designed differently from the icon displayed on the information purveying frame as the first information management area in the one-touch frame as the second information management area. There are also occasions where the server is willing to grasp the fact that the icon has been registered in the information display apparatus. In such case, a notification may be made to the effect that another icon is to be acquired from a particular server to the picture information recording unit 209 instead of directly transmitting the icon received from the first management area controller to the picture information recording unit 209. In giving a decision at this time whether the icon is to be directly transmitted or another icon is to be registered, it is a flag is provided for indicating whether or not a new icon is to be acquired from another server, as the related information to be included in the icon as the first picture information, such flag being then referenced in cooperation with the related information extraction unit 210 to decide the operation.

If another icon is newly acquired in performing the registration operation, an icon displayed in the information purveying frame and an icon displayed in the one-touch frame may advantageously be of a small area and a large area, respectively. If the related information included in the icon as the first picture information or the picture specifying information as the icon identifying information is included in the request to the server, the marketing information indicating as to which icon information in the server has stimulated the operator's interest may be obtained satisfactorily and in detail. The sequence of icon decision in the server may also be furnished as at least two icons are selected with a proper probability. By so doing, it is possible for a server to offer services such as stake. Specifically, hit and miss may be assigned to one sort of icon and to the other sort of icon, respectively, and the hit-or-miss game may be played by performing a specified operation in the first management area. By providing such icon, another pastime may be afforded to the operator.

### (Other embodiment 3)

In the above-described first embodiment, the picture information recording unit 209 and the related information recording unit 211 are assumed to be independent recorded units. It is however possible to unify these recording units to perform recording as icons having the related information included therein. Of course, the related information extraction unit 210 is required even in such case.

However, it is unnecessary to startup the related information extraction unit 210 the instant the recording information acquisition unit 208 has received the first picture information, it being only necessary to boot it when the second management area controller 212 gives a decision on an operation which is based on the related information.

### (Other embodiment 4)

In the first embodiment, the description is made on the assumption that the area for displaying the main display information, the information purveying frame as the first management area and the one-touch frame as the second management area have respective independent areas. However, it is unnecessary for the main display information to be clearly separated from the first management area. That is, it is only sufficient that the first management area controller 203 grasps which of the icons is to be specified by the operator. It is possible to display only the text and the icons on the display surface of the main display information in a form of superimposition. If such display is made, there is no necessity to change the configuration, it being only the operation of the display control unit 214 is changed to support the superimposition.

### (Other embodiment 5)

In the foregoing description, the display in the information purveying frame is controlled using premium values. Alternatively, such a technique is also possible in which an information purveying frame is simply displayed each time the first picture information is distributed. In such case, it is only sufficient that sorting is made beginning from the new first picture information.

### (Other embodiment)

In the foregoing description, the function separation is made into modules. However, these functions may be independently constituted as hardware or may be implemented as software.

On the other hand, the term "connection " does not necessarily specify direct physical connection as hardware, such that, if connection is realized by software, it is only sufficient that the information is sent unidirectionally or bi-directionally.

### Industrial Applicability

According to the present invention, as described above, a variety of information furnished by the information purveyor can be effectively put into order on the part of the operator using an icon as a clue. On the part of the information purveyor, effective information purveying can be realized.

## Claims

1. An information display apparatus having a display unit connected to a network, comprising:
a communication section for acquiring a first picture from said network;
a first management area controller for displaying a first management area, sorting and displaying the acquired first picture and for detecting the first picture displayed in said first management area controller when an operator has specified said first picture; and
a second management area controller for displaying a second management area, and for determining a second picture, including the related information, based on the specified picture, said second management area controller displaying the related information included in said second picture when an operation specifying said second picture is performed, making said related information selectable, and performing processing based on the related information if there is selection by the operator.

2. The information display apparatus according to claim 1 wherein said communication section acquires a premium value corresponding to the first picture and wherein said first management area controller sorts the first picture acquired in accordance with said premium value to display the so-sorted first picture.

3. The information display apparatus according to claim 1 wherein said communication section acquires a premium value corresponding to the first picture and said first management area performs calculations at a time interval on said premium value to sort the first picture based on the results of calculations to display the sorted first picture.
